# FASCICULE DE BREVET EUROPEEN

(11) **EP 2 428 417 B1**
(45) Date de publication et mention de la délivrance du brevet: **02.12.2015**
(21) Numéro de dépôt: 11181243.4
(22) Date de dépôt: 14.09.2011
(51) Int. Cl.: B60T 13/14, B60T 11/21

(54) **Système de freinage amélioré**
Verbessertes Bremssystem
Improved braking system

(30) Priorité: 14.09.2010 FR 1057316
(43) Date de publication de la demande: 14.03.2012
(73) Titulaire: Poclain Hydraulics Industrie, 60410 Verberie (FR)
(72) Inventeur: Heren, Jean A, 60410 VERBERIE (FR); Gostomski, Romain, 60410 VERBERIE (FR); Costaz, Dominique P, 60410 VERBERIE (FR); Roger, Fabien A, 60410 VERBERIE (FR)
(74) Mandataire: Regimbeau

(56) Documents cités:
- EP-A1- 1 028 044
- EP-A2- 2 008 897
- WO-A2-2008/001208

## Description

### DOMAINE TECHNIQUE GENERAL

La présente invention concerne le domaine des systèmes hydrauliques de freinage, et plus particulièrement des systèmes hydrauliques de freinage pour véhicules agricoles.

### ETAT DE L'ART

Les véhicules agricoles tels que les tracteurs sont amenés à évoluer dans des conditions variant fortement, allant d'un champ à une route. Ces conditions impliquent des vitesses de déplacement variant fortement, et des problématiques de freinage bien distinctes.

En effet, lors du déplacement dans un terrain tel qu'un champ, le véhicule se déplace à vitesse réduite, et pourra freiner facilement. De plus, l'espace disponible pour réaliser des virages peut être fortement réduit, nécessitant ainsi que le véhicule puisse pivoter par rapport à l'une de ses roues.

En condition de route, au contraire, les véhicules agricoles peuvent atteindre des vitesses relativement élevées, ce qui pose problème pour obtenir un freinage efficace, notamment en raison de leur inertie élevée, et en particulier dans le cas où le véhicule est en descente.

Les solutions conventionnelles de freinage pour véhicules agricoles présentent deux pédales de frein distinctes, chacune commandant le freinage d'une roue motrice du véhicule. Ainsi, dans le cas d'un tracteur, une première pédale de frein va commander le freinage de la roue arrière droite, et une seconde pédale de frein va commander le freinage de la roue arrière gauche.

Ainsi, lors du déplacement du véhicule dans un champ, ou plus généralement lorsque le véhicule est en condition de travail, l'utilisateur peut n'actionner qu'un seul frein arrière, permettant au véhicule de pivoter par rapport à la roue qui est freinée.

En condition de route, l'utilisateur actionne les deux pédales de frein à la fois, ce qui peut être facilité par l'apposition d'une barre de liaison entre les deux pédales de frein que l'utilisateur met en place préalablement à un déplacement sur route.

Ces solutions présentent toutefois plusieurs désavantages. En effet, le freinage qu'elles procurent peut s'avérer insuffisant, notamment lorsque le véhicule est dans une pente.

De plus, les systèmes conventionnels utilisent des sources d'alimentation en pression distinctes pour alimenter les moyens de freinage de chacune des roues arrières du véhicule ; il y a donc un risque de déséquilibre lors du freinage même en cas d'activation simultanée des deux pédales de frein.

Le document WO 2008/001208 vise à répondre à ces problématiques, et propose un système hydraulique de freinage pour véhicule agricole, pouvant alterner entre :
- Une configuration de travail, dans laquelle le freinage des roues arrière est commandé indépendamment par deux pédales de frein, les moyens de freinage de chacune des roues étant chacun alimentés par une source d'alimentation en pression distincte ; le système comprend donc deux sources d'alimentation en pression distinctes. En cas de pression simultanée sur les deux pédales de frein, les roues arrières sont chacune freinées sous l'action d'une source d'alimentation en pression distincte, et les roues avant sont freinées sous l'effet combiné de ces deux sources d'alimentation en pression.
- Une position de route, ou plus généralement de déplacement à vitesse élevée, dans laquelle une des sources d'alimentation en pression alimente en pression les moyens de freinage des deux roues arrières, et l'autre des sources d'alimentation en pression alimente en pression des moyens de freinage des roues avant.

Afin d'alterner entre la configuration de travail et la configuration de route, l'utilisateur active une commande, qui va piloter un distributeur.

Ce système hydraulique de freinage présente toutefois des inconvénients. En effet, l'ajout de commandes pour le passage de la configuration de travail à la configuration de route nécessite une étape supplémentaire de la part de l'utilisateur, ce qui entraine un risque en cas de circulation à vitesse élevée sans que la configuration route soit sélectionnée. De plus, de tels composants augmentent le coût du système de freinage.

Par ailleurs, en cas de défaillance d'une source d'alimentation en pression, le freinage du véhicule se trouve fortement impacté.

Enfin, ce système hydraulique de freinage peut s'avérer insuffisant en cas de présence d'une remorque ou d'un auxiliaire accroché au véhicule, qui nécessite alors un système de freinage indépendant complet.

### PRESENTATION DE L'INVENTION

La présente invention vise à répondre à ces inconvénients, et propose un système hydraulique de freinage d'un véhicule comprenant un essieu avant et un essieu arrière, ledit système de freinage comprenant :
- un premier et un second moyen d'alimentation en pression,
- des moyens de freinage, comprenant :
   o un premier moyen de freinage de l'essieu arrière,
   o un second moyen de freinage de l'essieu arrière,
   o un moyen de freinage de l'essieu avant,

ledit système hydraulique étant caractérisé en ce qu'il comprend un distributeur d'admission arrière, un distributeur d'admission avant, un premier distributeur de frein et un second distributeur de frein, définissant
o une configuration de repos, dans laquelle aucun des moyens de freinage n'est alimenté ;
o une première configuration de freinage, dans laquelle le premier moyen d'alimentation alimente en pression le premier moyen de freinage de l'essieu arrière ;
o une deuxième configuration de freinage, dans laquelle le premier moyen d'alimentation alimente en pression le second moyen de freinage de l'essieu arrière ;
o une troisième configuration de freinage, dans laquelle le premier moyen d'alimentation alimente en pression les premier et second moyens de freinage de l'essieu arrière, et le second moyen d'alimentation alimente en pression le moyen de freinage de l'essieu avant,

l'alimentation en pression du moyen de freinage de l'essieu avant par le second moyen d'alimentation en pression étant réalisée via le distributeur d'admission avant, le premier distributeur de frein et le second distributeur de frein.

Selon une variante, le système comprend deux pédales de frein qui sont activées via l'application d'une pression par l'utilisateur, et en ce que la configuration de repos est la position dans laquelle se trouve le système lorsqu'aucune pression n'est appliquée sur les pédales de frein, la première configuration de freinage est déclenchée par une pression sur l'une desdites pédales de frein, la deuxième configuration de freinage est déclenchée par une pression sur l'autre desdites pédales de frein, et la troisième configuration de freinage est déclenchée par une pression simultanée sur les deux pédales de frein.

Selon une autre variante, dans sa troisième configuration, l'un des premier ou second moyens d'alimentation alimente en pression un moyen de freinage auxiliaire.

Selon un mode de réalisation particulier de cette variante, seul celui ayant la pression la plus élevée parmi le premier et le second moyen d'alimentation en pression alimente en pression le moyen de freinage auxiliaire, de manière à ce que la pression de freinage du moyen de freinage auxiliaire soit supérieure ou égale à la pression de freinage du moyen de freinage de l'essieu avant.

Selon une variante, ledit distributeur d'admission avant est asservi en déplacement par rapport au déplacement du distributeur d'admission arrière via des moyens de liaison mécaniques et hydrauliques.

Selon un mode de réalisation particulier de cette variante, lesdits moyens de liaison hydrauliques comprennent une ligne d'asservissement alimentée en pression via un conduit relié au distributeur d'alimentation arrière, et en ce que lesdits moyens de liaison mécanique comprennent une tige de poussée adaptée pour ne déplacer le distributeur d'admission avant que lorsque les moyens de liaison hydrauliques sont défaillants.

Selon une autre variante, lesdits premier et second moyens d'alimentation en pression comprennent chacun au moins un accumulateur.

Selon une variante, lesdits moyens de distribution comprennent un distributeur d'admission arrière, un distributeur d'admission avant, un premier distributeur de frein et un second distributeur de frein, dans lequel :
- le distributeur d'admission arrière présente :
   o une entrée reliée au premier moyen d'alimentation en pression, et
   o une sortie reliée au premier et au second distributeur de frein ;

- le distributeur d'admission avant présente :
   o une entrée reliée au second moyen d'alimentation en pression, et
   o une sortie reliée au premier distributeur de frein ;
- le premier distributeur de frein présente :
   o une première entrée reliée à la sortie du distributeur d'admission arrière,
   o une seconde entrée reliée à la sortie du distributeur d'admission avant,
   o une première sortie reliée au premier moyen de freinage de l'essieu arrière,
   o une seconde sortie reliée au second distributeur de frein ;
- le second distributeur de frein présente :
   o une première entrée reliée à la sortie du distributeur d'admission arrière,
   o une seconde entrée reliée à la seconde sortie du premier distributeur de frein,
   o une première sortie reliée au second moyen de freinage de l'essieu arrière,
   o une seconde sortie reliée au moyen de freinage de l'essieu avant.

Selon un mode de réalisation particulier de cette variante, chacun desdits distributeurs présente une position de disjonction dans laquelle chacune des sorties est reliée à un réservoir à pression atmosphérique et chacune des entrées est fermée, et une position de conjonction dans laquelle
- pour le distributeur d'admission arrière, son entrée est reliée à sa sortie ;
- pour le distributeur d'admission avant, son entrée est reliée à sa sortie ;
- pour le premier distributeur de frein, sa première entrée est reliée à sa première sortie et sa seconde entrée est reliée à sa seconde sortie ;
- pour le second distributeur de frein, sa première entrée est reliée à sa première sortie et sa seconde entrée est reliée à sa seconde sortie.

D'après un exemple de réalisation de ce mode de réalisation particulier,
- dans sa configuration de repos, chacun desdits distributeurs est en position de disjoncteur ;
- dans sa première configuration de freinage, le distributeur d'admission arrière, le distributeur d'admission avant et le premier distributeur de frein sont en position de conjoncteur, tandis que le second distributeur de frein est en position de disjoncteur ;
- dans sa deuxième configuration de freinage, le distributeur d'admission arrière, le distributeur d'admission avant et le second distributeur de frein sont en position de conjoncteur, tandis que le premier distributeur de frein est en position de disjoncteur ;
- dans sa troisième configuration de freinage, le distributeur d'admission arrière, le distributeur d'admission avant, le premier distributeur de frein et le second distributeur de frein sont en position de conjoncteur.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1 présente un système hydraulique de freinage selon l'invention dans une position de repos,
- les figures 2, 3 et 4 présentent ce système hydraulique de freinage selon trois configurations de freinage.

### DESCRIPTION DETAILLEE

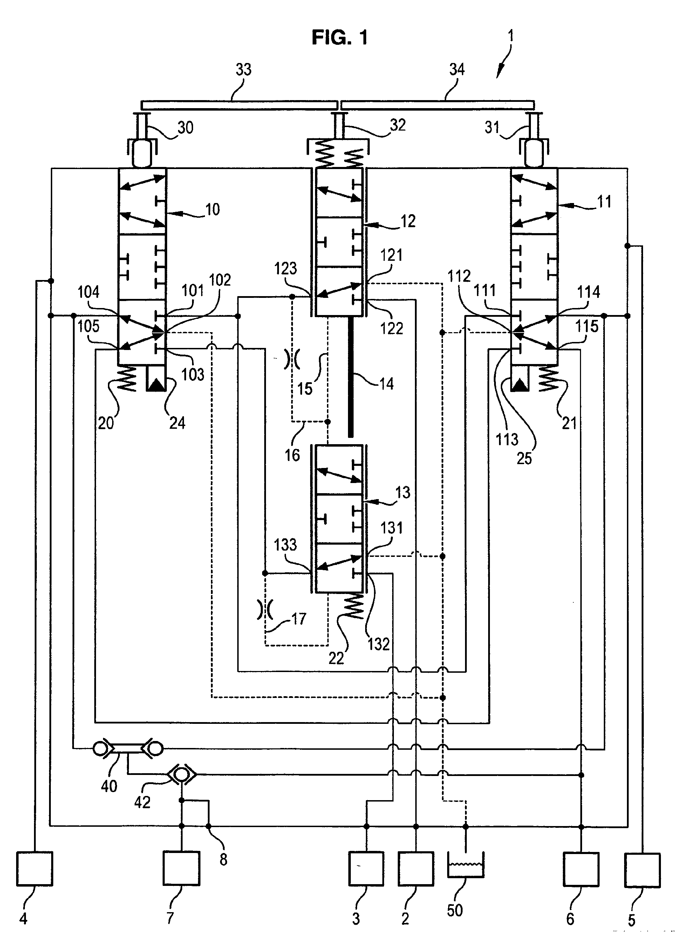

La figure 1 présente un mode de réalisation particulier de système hydraulique de freinage 1 selon l'invention dans une configuration de repos.

Ce système hydraulique de freinage 1 est typiquement monté sur un véhicule présentant des roues arrières motrices, les roues arrières droite et gauche étant montées sur des essieux distincts.

Ce système hydraulique de freinage 1 comprend :
- deux sources d'alimentation en pression, respectivement 2 et 3,
- deux freins arrières : un frein arrière droit 4 et un frein arrière gauche 5 permettant respectivement de freiner respectivement la roue arrière droite et la roue arrière gauche du véhicule ;
- des moyens de freinage avant 6 d'un essieu avant ;
- des moyens de freinage auxiliaires 7, typiquement les moyens de freinage d'une remorque ou d'un attelage ;
- des moyens de distribution 10, 11, 12 et 13 qui seront détaillés par la suite,
- des moyens d'actionnement 20, 21, 22, permettant à l'utilisateur d'actionner les moyens de distribution,
- des éléments de raccordement hydrauliques, assurant la liaison entre les différents composants du système hydraulique de freinage 1.

Dans la variante illustrée sur la figure 1, le système hydraulique de freinage 1 comprend de plus une prise de pression 8, une telle prise de pression étant typiquement reliée à un manomètre ou un mano contact, ou servant par exemple pour l'éclairage de feux.

Tel qu'illustré, les moyens de distribution 10, 11, 12 et 13 sont des distributeurs pouvant alterner entre trois positions.

Le premier distributeur de frein 10 présente cinq orifices : 101, 102, 103, 104 et 105.

Dans la première position du premier distributeur de frein 10, que l'on qualifiera de « position de repos », le premier orifice 101 et le troisième orifice 103 sont fermés, tandis que le second orifice 102 est relié à la fois au quatrième orifice 104 et au cinquième orifice 105.

Dans sa seconde position, que l'on qualifiera de « position fermée », tous les orifices du premier distributeur de frein 10 sont fermés.

Dans sa troisième position, que l'on qualifiera de « position de freinage », le premier orifice 101 du premier distributeur de frein 10 est relié au quatrième orifice 104, le deuxième orifice 102 est fermé, et le troisième orifice 103 est relié au cinquième orifice 105.

De la même manière, les autres distributeurs 11, 12 et 13 présentent chacun trois positions que l'on qualifiera de position de repos, position fermée, et position de freinage.

Le second distributeur de frein 11 est similaire au premier distributeur de frein 10 présenté précédemment ; il comporte cinq orifices : 111, 112, 113, 114 et 115.

En position de repos, le premier orifice 111 et le troisième orifice 113 sont fermés, tandis que le deuxième orifice 112 est relié au quatrième orifice 114 et au cinquième orifice 115.

En position fermée, tous les orifices 111, 112, 113, 114 et 115 sont fermés.

En position de freinage, le premier orifice 111 est relié au quatrième orifice 114, le troisième orifice 113 est relié au cinquième orifice 115, et le deuxième orifice 112 est fermé.

Le distributeur d'admission arrière 12 comporte trois orifices : 121, 122 et 123.

Dans sa configuration de repos, le premier orifice 121 est relié au troisième orifice 123, tandis que le deuxième orifice 122 est fermé. Dans sa configuration fermée, tous les orifices 121, 122 et 123 sont fermés.

Dans sa configuration de freinage, le premier orifice 121 est fermé, tandis que le deuxième orifice 122 est relié au troisième orifice 123.

Le distributeur d'admission avant 13 est identique au distributeur d'admission arrière 12 ; il comporte trois orifices : 121, 132 et 133. Dans sa configuration de repos, le premier orifice 131 est relié au troisième orifice 133, tandis que le deuxième orifice 132 est fermé. Dans sa configuration fermée, tous les orifices 131, 132 et 133 sont fermés.

Dans sa configuration de freinage, le premier orifice 131 est fermé, tandis que le deuxième orifice 132 est relié au troisième orifice 133.

Les distributeurs 10, 11, 12 et 13 sont par défaut dans leur position de repos, sous l'effet de moyens élastiques tels que des ressorts, respectivement 20, 21 et 23 pour les distributeurs 10, 11 et 13. En raison du lien entre les distributeurs 12 et 13, le moyen élastique 23 assure également le maintien par défaut du distributeur d'admission arrière 12 en position de repos. Les moyens élastiques peuvent être couplés à des activateurs ; dans le mode de réalisation représenté, les moyens élastiques 20 et 21 sont chacun couplés à un activateur, respectivement 24 et 25.

Le système comprend de plus des moyens de commande 30, 31 et 32 commandant respectivement le déplacement des distributeurs 10, 11 et 12. Ces moyens de commande permettent d'effectuer le changement de position des distributeurs 10, 11 et 12, typiquement en appliquant une pression sur les moyens de commande.

Les distributeurs 12 et 13 sont reliés entre eux via une double liaison comprenant un moyen de liaison mécanique 14 et un moyen de liaison hydraulique 15, qui les lie en déplacement. Ainsi, ces deux distributeurs sont tous deux dans la même position : position de repos, fermée ou de freinage.

Dans le système hydraulique 1 tel qu'illustré sur les figures, les distributeurs 12 et 13 sont des distributeurs hydrauliques proportionnels, dont la position est définie par un équilibre entre les efforts qui sont appliqués aux extrémités de ces distributeurs, permettant ainsi une régulation de leur position.

Lorsqu'au moins l'un des moyens de freinage arrières 4 ou 5 est alimenté en pression par le premier moyen d'alimentation en pression 2, la liaison hydraulique 15 entre les distributeurs 12 et 13 est également alimentée en pression via le conduit 16 qui est relié à la sortie 123 du distributeur d'alimentation arrière 12, ce qui va entrainer un déplacement du distributeur d'alimentation avant 13 similaire au déplacement du distributeur d'alimentation arrière 12.

Le moyen de liaison mécanique 14 est typiquement une tige de poussée, configuré de manière à n'entrainer le distributeur d'alimentation avant 13 qu'en cas de pression insuffisante dans le moyen de liaison hydraulique 15, par exemple en étant dimensionnée de manière à être plus courte que la distance séparant les distributeurs 12 et 13 afin de ne pas être au contact de ces deux distributeurs si la liaison hydraulique 15 est alimentée, et joue ainsi un rôle de dispositif de sécurité en cas de défaillance de la liaison hydraulique 15.

La sortie 133 du distributeur d'alimentation avant 13 est quant à elle reliée à un conduit de retour 17, qui vient assurer, en conjonction avec un moyen de retour élastique 22, le retour du distributeur d'alimentation arrière 13 à sa configuration de repos lorsque l'utilisateur cesse d'appliquer une pression sur le moyen de commande 32.

Les conduits 16 et 17 tels que représentés sont munis de limiteurs de débit, afin de contrôler la pression appliquée.

Cette configuration spécifique des distributeurs 12 et 13 permet ainsi d'alimenter le circuit en pression via deux moyens d'alimentation en pression distincts 2 et 3 dont le déplacement relatif de l'un par rapport à l'autre est asservi.

En pratique, les moyens de commande sont liés deux à deux, et correspondent aux pédales de frein du véhicule.

Ainsi, les moyens de commande 30 et 32 sont activés simultanément par la pédale de frein droit 33 du véhicule, tandis que les moyens de commande 31 et 32 sont activés simultanément par la pédale de frein gauche 34 du véhicule. La pression simultanée sur les deux pédales de frein du véhicule entraine donc l'activation des trois commandes 30, 31 et 32.

L'application d'une pression sur les pédales de frein 33 et 34 est symbolisée sur les figures par une flèche.

Le premier moyen d'alimentation en pression 2 est typiquement un accumulateur, permettant de délivrer une pression prédéterminée.

Ce premier moyen d'alimentation en pression est relié au deuxième orifice 122 du distributeur d'admission arrière 12.

Le troisième orifice 123 du distributeur d'admission arrière 12 est quant à lui relié d'une part au premier orifice 101 du premier distributeur de frein 10, et d'autre part au premier orifice 111 du second distributeur de frein 11.

Le second moyen d'accumulation en pression 3, qui est également typiquement un accumulateur, est relié au deuxième orifice 132 du distributeur d'admission avant 13.

Le troisième orifice 133 de ce distributeur d'admission avant 13 est quant à lui relié au troisième orifice du premier distributeur de frein 10.

Le cinquième orifice 105 du premier distributeur de frein 10 est relié au troisième orifice 113 du second distributeur de frein 11, et le cinquième orifice 115 du second distributeur de frein 11 est relié aux moyens de freinage avant 6.

Le quatrième orifice 104 du premier distributeur de frein 10 est relié au frein arrière droit 4, et le quatrième orifice 114 du second distributeur de frein 11 est relié au frein arrière gauche 5.

Le quatrième orifice 104 du premier distributeur de frein 10 ainsi que le quatrième orifice 114 du second distributeur de frein 11 sont de plus chacun reliés à une entrée d'une même soupape de sélection 40.

Cette soupape de sélection 40 présente une sortie, qui est reliée à une première entrée d'un clapet navette 42, l'autre entrée de ce clapet navette 42 étant reliée au cinquième orifice 115 du second distributeur de frein 11, et donc aux moyens de freinage avant 6.

Ce clapet navette 42 présente une sortie, qui est reliée aux moyens de freinage auxiliaires 7, ainsi que la prise de pression 8.

La soupape de sélection 40 va conduire uniquement la pression la plus faible entre :
- la pression au niveau du quatrième orifice 104 du premier distributeur de frein 10 (et donc également la pression au niveau du moyen de freinage arrière droit 4), et
- la pression au niveau du quatrième orifice 114 du second distributeur de frein 11 (et donc également la pression au niveau du moyen de freinage arrière gauche 5).

C'est donc la pression la plus faible parmi ces deux pressions qui sort de la soupape de sélection 40 pour aller vers le clapet navette 42.

Le clapet navette 42 sélectionne quant à lui la pression la plus élevée entre :
- la pression sortant de la soupape de sélection 40, et
- la pression au niveau du cinquième orifice 115 du second distributeur de frein 11 (et donc également la pression au niveau des moyens de freinage avant 6).

C'est donc la pression la plus élevée parmi ces deux pressions qui sort du clapet navette 42, pour aller alimenter les moyens de freinage auxiliaires 7 ainsi que la prise de pression 8.

Les orifices dont la liaison n'a pas été décrite sont pour leur part reliés à un réservoir sans pression 50, également appelé réservoir à pression atmosphérique.

Plus précisément, dans le circuit hydraulique tel qu'illustré sur la figure 1, les orifices suivants sont reliés au réservoir sans pression 50 :
- le deuxième orifice 102 du premier distributeur de frein 10,
- le deuxième orifice 112 du second distributeur de frein 11,
- le premier orifice 121 du distributeur d'admission arrière 12,
- le premier orifice 131 du distributeur d'admission avant 13.

Dans la configuration de repos du système hydraulique 1 tel qu'illustré sur la figure 1, les moyens de freinage arrières 4 et 5 ainsi que les moyens de freinage avant 6 ne sont pas alimentés en pression ; ils sont en effet tous reliés au réservoir à pression atmosphérique 50.

Les moyens de freinage auxiliaires 7 sont pour leur part également reliés au réservoir à pression atmosphérique 50.

Les premier et second moyens d'alimentation en pression 2 et 3 sont reliés à des orifices fermés, respectivement le deuxième orifice 122 du distributeur d'admission arrière 12, et le deuxième orifice 132 du distributeur d'admission avant 13.

Ainsi, dans cette configuration, il n'y a aucune action de freinage qui est exercée.

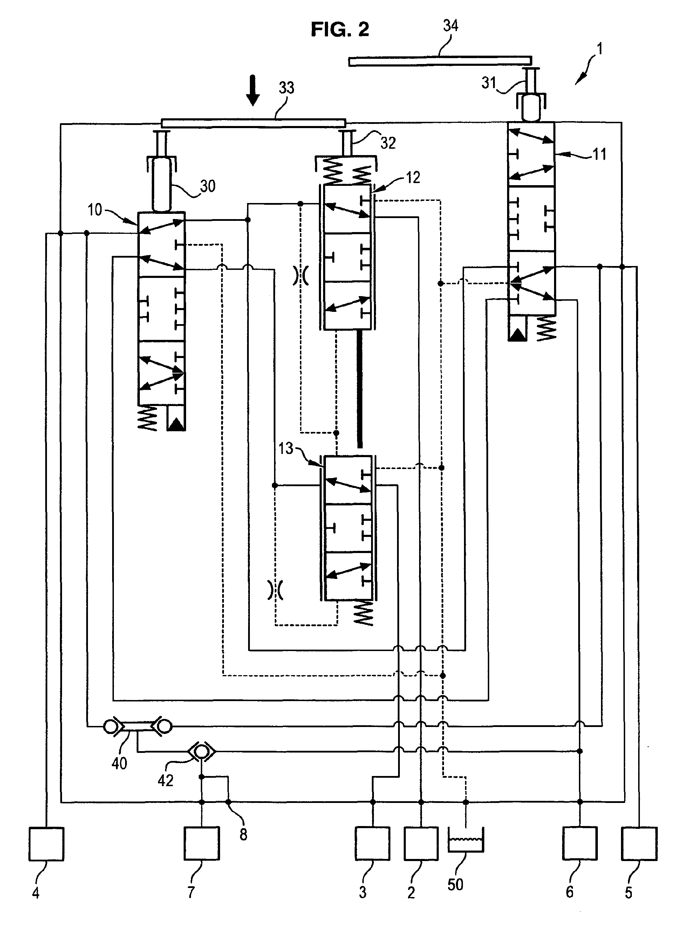

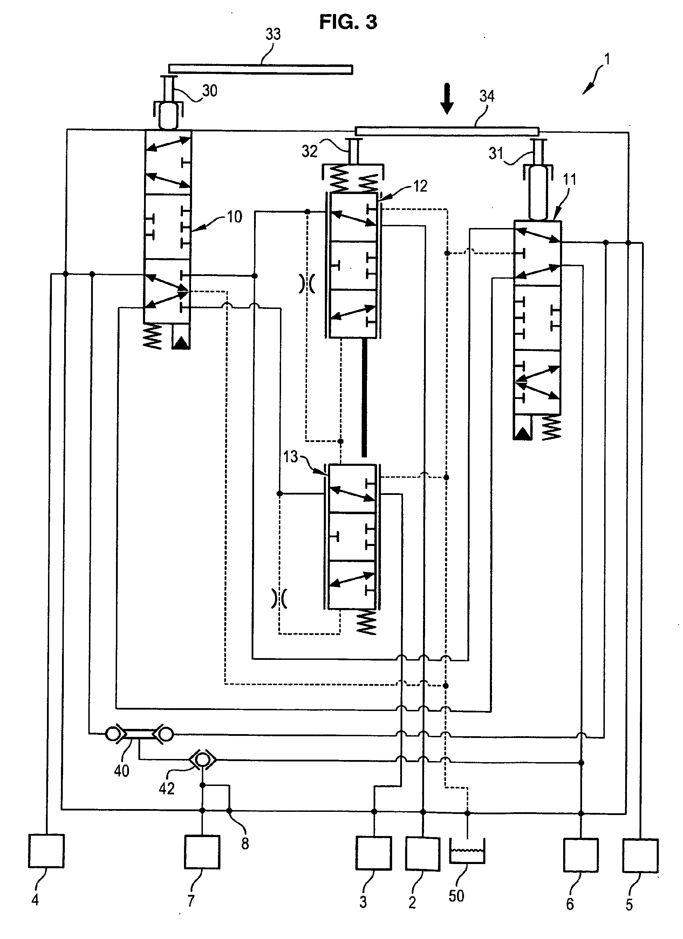

Les figures 2 et 3 présentent le système hydraulique déjà présenté sur la figure 1, mais ici respectivement dans une première configuration de freinage et dans une seconde configuration de freinage.

Dans la première configuration de freinage telle qu'illustrée sur la figure 2, les commandes 30 et 32 sont activées, ce qui correspond typiquement à une pression exercée par l'utilisateur sur la pédale de frein droite du véhicule.

Le premier distributeur de frein 10, le distributeur d'admission arrière 12 et le distributeur d'admission avant 12 sont en position de freinage, tandis que le second distributeur de frein 11 est en position de repos.

Dans cette configuration, le frein arrière droit 4 est alimenté en pression par le premier moyen d'alimentation en pression 2 via le distributeur d'admission arrière 12 et le premier distributeur de frein 10.

Le moyen de freinage arrière gauche 5 ainsi que les moyens de freinage avant 6 sont pour leur part reliés au réservoir à pression atmosphérique 50 via le second distributeur de frein 11.

Le moyen de freinage auxiliaire 7 est donc également relié au réservoir à pression atmosphérique 50, la soupape de sélection 40 sélectionnant la pression la plus faible entre la pression du moyen de freinage arrière droit 4 et du moyen de freinage arrière gauche 5.

Ainsi, dans cette configuration, seul le frein arrière droit 4 est activé.

Dans la deuxième configuration de freinage telle qu'illustrée sur la figure 3, les commandes 31 et 32 sont activées, ce qui correspond typiquement à une pression exercée par l'utilisateur sur la pédale de frein gauche du véhicule.

Dans cette configuration, le moyen de freinage arrière gauche 5 est alimenté en pression par le premier moyen d'alimentation en pression 2 via le distributeur d'admission arrière 12 et le second distributeur de frein 11.

Ainsi, dans la première ou la deuxième configuration de pression, les moyens de freinage arrières droit 4 ou gauche 5 sont chacun alimentés par le même moyen d'alimentation en pression 2 ; il en résulte une pression de freinage identique au niveau des moyens de freinage arrières 4 et 5 dans ces deux configurations.

Le moyen de freinage arrière droit 4 ainsi que les moyens de freinage avant 6 sont pour leur part reliés au réservoir à pression atmosphérique 50 via le premier distributeur de frein 10.

Le moyen de freinage auxiliaire 7 est donc également relié au réservoir à pression atmosphérique 50, la soupape de sélection 40 sélectionnant la pression la plus faible entre la pression du moyen de freinage arrière droit 4 et du moyen de freinage arrière gauche 5.

Ainsi, dans cette configuration, seul le moyen de freinage arrière gauche 5 est activé.

Dans ces deux configurations de freinage, seul un des moyens de freinage arrières 4 ou 5 est activé, ce frein arrière étant dans les deux cas alimenté en pression par le premier moyen d'alimentation en pression 2.

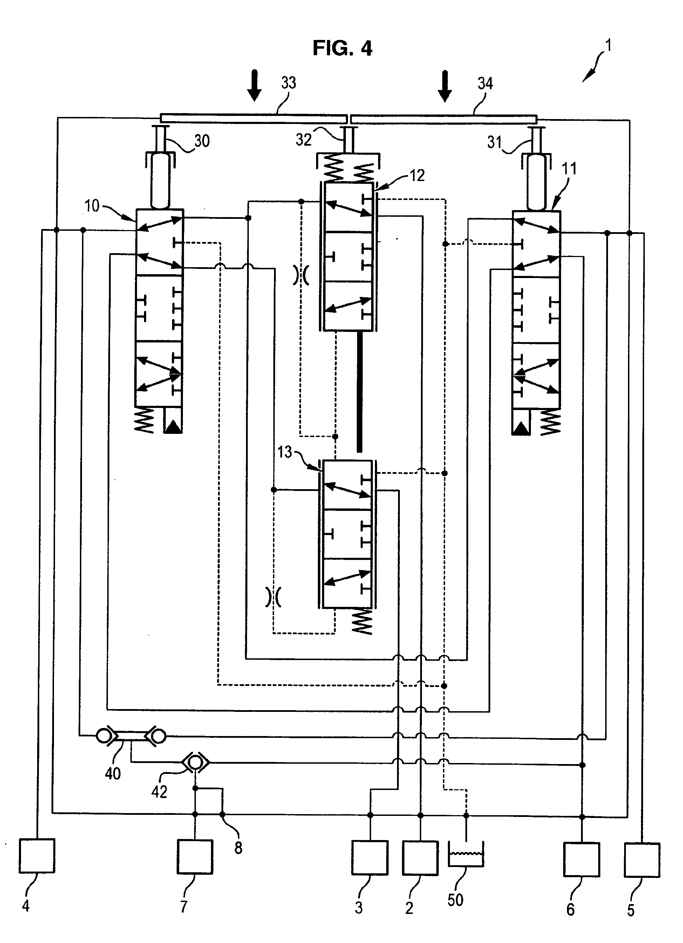

La figure 4 présente le système hydraulique 1 dans une troisième configuration de freinage.

Dans cette configuration, les trois commandes 30, 31 et 32 sont activées, ce qui correspond à une pression simultanée sur les deux pédales de frein.

Le premier distributeur de frein 10, le second distributeur de frein 11, le distributeur d'admission arrière 12 et le distributeur d'admission avant 13 sont en position de freinage.

Le moyen de freinage arrière droit 4 est alors alimenté en pression par le premier moyen d'alimentation en pression 2 via le distributeur d'admission arrière 12 et le premier distributeur de frein 10.

Le moyen de freinage arrière gauche 5 est alimenté en pression par le premier moyen d'alimentation en pression 2 via le distributeur d'admission arrière 12 et le second distributeur de frein 11.

Les moyens de freinage avant 6 sont alimentés en pression par le second moyen d'alimentation en pression 3 via le distributeur d'admission arrière 13, le premier distributeur de frein 10 et le second distributeur de frein 11.

Seule cette configuration spécifique des distributeurs permet une alimentation en pression des moyens de freinage avant 6. Le fluide hydraulique délivré par les seconds moyens d'alimentation en pression doivent en effet nécessairement passer par le premier 10 et le second 11 distributeur de frein afin de pouvoir alimenter en pression les moyens de freinage avant 6.

La soupape de sélection 40 sélectionne alors la pression la plus faible entre la pression au niveau du moyen de freinage arrière droit 4 et du moyen de freinage arrière gauche 5, puis le clapet navette 42 sélectionne la pression la plus élevée entre la pression sortant de la soupape de sélection 40 et la pression au niveau des moyens de freinage avant 6, afin d'alimenter en pression les moyens de freinage auxiliaires 7 et la prise de pression 8.

Les moyens de freinage auxiliaires 7 sont ainsi adaptés pour réaliser un freinage au moins égal au freinage réalisé par les moyens de freinage avant 6, ce qui permet par exemple, dans le cas où les moyens de freinage auxiliaires correspondent à des moyens de freinage d'un attelage attelée au véhicule agricole muni d'un système de freinage selon l'invention, d'éviter le retournement de cet attelage.

Le système hydraulique de freinage présenté permet ainsi à un utilisateur d'obtenir un freinage adapté à des conditions de travail (par exemple sur un chantier ou dans un champ) en appuyant uniquement sur l'une ou l'autre des pédales de frein, ou un freinage adapté à des conditions de circulation sur route à vitesse élevée en appuyant simultanément sur les deux pédales de frein, le passage de l'une à l'autre des ces configurations de freinage ne nécessitant pas d'opération spécifique de la part de l'utilisateur outre la pression sur les pédales de frein.

De plus, en cas de défaillance d'un des moyens d'alimentation en pression 2 ou 3, le véhicule conservera des moyens de freinage actifs lors de l'activation des trois commandes 30, 31 et 32. :
- en cas de défaillance du second moyen d'alimentation en pression 3, les moyens de freinage arrière 4 et 5 ainsi que les moyens de freinage auxiliaires 7 sont toujours alimentés en pression ; seuls les moyens de freinage avant 6 sont alors défaillants.
- en cas de défaillance du premier moyen d'alimentation en pression 2, les moyens de freinage avant 6 ainsi que les moyens de freinage auxiliaires 7 sont toujours alimentés en pression ; seuls les moyens de freinage arrières 4 et 5 sont alors défaillants. En effet, la liaison hydraulique 15 entre les distributeurs 12 et 13 n'est pas alimentée en pression, mais la liaison mécanique 14 permet d'assurer le déplacement du distributeur 13 dans sa position de freinage, permettant ainsi de conserver l'alimentation des moyens de freinage avant 6 et auxiliaires 7.

La position fermée des distributeurs 10, 11, 12 et 13 permet de placer le système hydraulique 1 dans une configuration où tous les orifices sont fermés, ce qui est intéressant notamment lors du remplacement de composants du circuit hydraulique 1.

## Revendications

1. Système hydraulique (1) de freinage d'un véhicule comprenant un essieu avant et un essieu arrière, ledit système de freinage comprenant :
- un premier (2) et un second (3) moyen d'alimentation en pression,
- des moyens de freinage, comprenant :
∘ un premier moyen de freinage de l'essieu arrière (4),
∘ un second moyen de freinage de l'essieu arrière (5),
∘ un moyen de freinage de l'essieu avant (6),
ledit système hydraulique (1) étant **caractérisé en ce qu'**il comprend un distributeur d'admission arrière (12), un distributeur d'admission avant (13), un premier distributeur de frein (10) et un second distributeur de frein (11), définissant
∘ une configuration de repos, dans laquelle aucun des moyens de freinage n'est alimenté ;
∘ une première configuration de freinage, dans laquelle le premier moyen d'alimentation alimente en pression le premier moyen de freinage de l'essieu arrière (4) ;
∘ une deuxième configuration de freinage, dans laquelle le premier moyen d'alimentation alimente en pression le second moyen de freinage de l'essieu arrière (5) ;
∘ une troisième configuration de freinage, dans laquelle le premier moyen d'alimentation alimente en pression les premier et second moyens de freinage de l'essieu arrière (4, 5), et le second moyen d'alimentation alimente en pression le moyen de freinage de l'essieu avant (6),
l'alimentation en pression du moyen de freinage de l'essieu avant (6) par le second moyen d'alimentation en pression (3) étant réalisée via le distributeur d'admission avant (13), le premier distributeur de frein (10) et le second distributeur de frein (11).

2. Système hydraulique (1) selon la revendication précédente, ledit système étant **caractérisé en ce qu'**il comprend deux pédales de frein (33, 34) qui sont activées via l'application d'une pression par l'utilisateur, et **en ce que** la configuration de repos est la position dans laquelle se trouve le système lorsqu'aucune pression n'est appliquée sur les pédales de frein (33, 34), la première configuration de freinage est déclenchée par une pression sur l'une desdites pédales de frein (33 ou 34), la deuxième configuration de freinage est déclenchée par une pression sur l'autre desdites pédales de frein (33 ou 34), et la troisième configuration de freinage est déclenchée par une pression simultanée sur les deux pédales de frein (33 et 34).

3. Système hydraulique (1) selon l'une des revendications précédentes, **caractérisé en ce que** dans sa troisième configuration, l'un des premier (2) ou second (3) moyens d'alimentation alimente en pression un moyen de freinage auxiliaire (7).

4. Système hydraulique (1) de freinage selon la revendication précédente, dans lequel seul celui ayant la pression la plus élevée parmi le premier et le second moyen d'alimentation en pression (2, 3) alimente en pression le moyen de freinage auxiliaire (7), de manière à ce que la pression de freinage du moyen de freinage auxiliaire (7) soit supérieure ou égale à la pression de freinage du moyen de freinage de l'essieu avant (6).

5. Système hydraulique (1) de freinage selon l'une des revendications précédentes, **caractérisé en ce que** ledit distributeur d'admission avant (13) est asservi en déplacement par rapport au déplacement du distributeur d'admission arrière (12) via des moyens de liaison mécaniques (14) et hydrauliques (15).

6. Système hydraulique (1) de freinage selon la revendication précédente, **caractérisé en ce que** lesdits moyens de liaison hydrauliques (15) comprennent une ligne d'asservissement alimentée en pression via un conduit (16) relié au distributeur d'alimentation arrière (12), et **en ce que** lesdits moyens de liaison mécanique (14) comprennent une tige de poussée adaptée pour ne déplacer le distributeur d'admission avant (13) que lorsque les moyens de liaison hydrauliques (15) sont défaillants.

7. Système hydraulique (1) de freinage selon l'une des revendications précédentes, **caractérisé en ce que** lesdits premier et second moyens d'alimentation en pression (2, 3) comprennent chacun au moins un accumulateur.

8. Système hydraulique (1) de freinage selon l'une des revendications précédentes, **caractérisé en ce que** lesdits moyens de distribution (10, 11, 12, 13) comprennent un distributeur d'admission arrière (12), un distributeur d'admission avant (13), un premier distributeur de frein (10) et un second distributeur de frein (11), dans lequel :
- le distributeur d'admission arrière (12) présente :
o une entrée (122) reliée au premier moyen d'alimentation en pression (2), et
o une sortie (123) reliée au premier et au second distributeur de frein (11) ;
- le distributeur d'admission avant (13) présente :
∘ une entrée (132) reliée au second moyen d'alimentation en pression (3), et
∘ une sortie (133) reliée au premier distributeur de frein (10) ;
- le premier distributeur de frein (10) présente :
∘ une première entrée (101) reliée à la sortie (123) du distributeur d'admission arrière (12),
∘ une seconde entrée (103) reliée à la sortie (133) du distributeur d'admission avant (13),
∘ une première sortie (104) reliée au premier moyen de freinage de l'essieu arrière (4),
∘ une seconde sortie (105) reliée au second distributeur de frein (11) ;
- le second distributeur de frein (11) présente :
∘ une première entrée (111) reliée à la sortie (123) du distributeur d'admission arrière (12),
∘ une seconde entrée (113) reliée à la seconde sortie (105) du premier distributeur de frein (10),
∘ une première sortie (114) reliée au second moyen de freinage de l'essieu arrière (5),
∘ une seconde sortie (115) reliée au moyen de freinage de l'essieu avant (6).

9. Système hydraulique (1) de freinage selon la revendication précédente **caractérisé en ce que** chacun desdits distributeurs (10, 11, 12, 13) présente une position de disjonction dans laquelle chacune des sorties (104, 105, 114, 115, 123, 133) est reliée à un réservoir à pression atmosphérique (50) et chacune des entrées (101, 103, 111, 113, 122, 132) est fermée, et une position de conjonction dans laquelle
- pour le distributeur d'admission arrière (12), son entrée (122) est reliée à sa sortie (123) ;
- pour le distributeur d'admission avant (13), son entrée (132) est reliée à sa sortie (133) ;
- pour le premier distributeur de frein (10), sa première entrée (101) est reliée à sa première sortie (104) et sa seconde entrée (103) est reliée à sa seconde sortie (105) ;
- pour le second distributeur de frein (11), sa première entrée (111) est reliée à sa première sortie (114) et sa seconde entrée (113) est reliée à sa seconde sortie (115).

10. Système hydraulique (1) de freinage selon la revendication précédente **caractérisé en ce que**
- dans sa configuration de repos, chacun desdits distributeurs (10, 11, 12, 13) est en position de disjoncteur ;
- dans sa première configuration de freinage, le distributeur d'admission arrière (12), le distributeur d'admission avant (13) et le premier distributeur de frein (10) sont en position de conjoncteur, tandis que le second distributeur de frein (11) est en position de disjoncteur ;
- dans sa deuxième configuration de freinage, le distributeur d'admission arrière (12), le distributeur d'admission avant (13) et le second distributeur de frein (11) sont en position de conjoncteur, tandis que le premier distributeur de frein (10) est en position de disjoncteur ;
- dans sa troisième configuration de freinage, le distributeur d'admission arrière (12), le distributeur d'admission avant (13), le premier distributeur de frein (10) et le second distributeur de frein (11) sont en position de conjoncteur.

## Patentansprüche

1. Hydrauliksystem (1) zum Bremsen eines Fahrzeugs eine Vorderachse und eine Hinterachse umfassend, wobei das besagte Bremssystem folgendes umfasst:
- ein erstes (2) und ein zweites (3) Druckversorgungsmittel,
- Bremsmittel, folgendes umfassend:
-- ein erstes Bremsmittel für die Hinterachse (4),
-- ein zweites Bremsmittel für die Hinterachse (5),
-- ein Bremsmittel für die Vorderachse (6),
wobei das besagte Hydrauliksystem (1) **dadurch gekennzeichnet ist, dass** es ein hinteres Eingangsventil (12), ein vorderes Eingangsventil (13), ein erstes Bremsventil (10) und ein zweites Bremsventil (11) umfasst, die folgendes definieren
-- eine Ruhekonfiguration, in der keines der Bremsmittel versorgt wird;
-- eine erste Bremskonfiguration, in der das erste Versorgungsmittel das erste Bremsmittel der Hinterachse (4) mit Druck versorgt;
-- eine zweite Bremskonfiguration, in der das erste Versorgungsmittel das zweite Bremsmittel der Hinterachse (5) mit Druck versorgt;
-- eine dritte Bremskonfiguration, in der das erste Versorgungsmittel das erste und das zweite Bremsmittel der Hinterachse (4, 5) mit Druck versorgt und das zweite Versorgungsmittel das Bremsmittel der Vorderachse (6) mit Druck versorgt,
wobei die Druckversorgung des Bremsmittels der Vorderachse (6) durch das zweite Druckversorgungsmittel (3) über das vordere Eingangsventil (13), das erste Bremsventil (10) und das zweite Bremsventil (11) erfolgt.

2. Hydrauliksystem (1) nach dem vorherigen Anspruch, wobei das besagte System **dadurch gekennzeichnet ist, dass** es zwei Bremspedale (33,34) umfasst, die durch das Anlegen eines Drucks durch den Benutzer aktiviert werden, und dadurch, dass die Ruhekonfiguration jene Position ist, in der sich das System befindet, wenn kein Druck auf die Bremspedale (33,34) ausgeübt wird, die erste Bremskonfiguration durch einen Druck auf eines der besagten Bremspedale (33 oder 34) ausgelöst wird, die zweite Bremskonfiguration durch einen Druck auf das andere der besagten Bremspedale (33 oder 34) ausgelöst wird, und die dritte Bremskonfiguration durch einen gleichzeitigen Druck auf die beiden Bremspedale (33 und 34) ausgelöst wird.

3. Hydrauliksystem (1) nach einem der vorherigen Ansprüche, **dadurch gekennzeichnet, dass** in seiner dritten Konfiguration eines der ersten (2) oder zweiten (3) Versorgungsmittel ein Hilfsbremsmittel (7) mit Druck versorgt.

4. Hydrauliksystem (1) zum Bremsen nach dem vorherigen Anspruch, wobei nur das Versorgungssystem mit dem höchsten Druck des ersten und zweiten Druckversorgungssystems (2, 3) das Hilfsbremsmittel (7) mit Druck versorgt, sodass der Bremsdruck des Hilfsbremsmittels (7) größer oder gleich dem Bremsdruck des Bremsmittels der Vorderachse (6) ist.

5. Hydrauliksystem (1) zum Bremsen nach einem der vorherigen Ansprüche, **dadurch gekennzeichnet, dass** die Bewegung des besagten vorderen Eingangsventils (13) im Verhältnis zur Bewegung des hinteren Eingangsventils (12) über mechanische (14) und hydraulische (15) Verbindungsmittel angesteuert wird.

6. Hydrauliksystem (1) zum Bremsen nach dem vorherigen Anspruch, **dadurch gekennzeichnet, dass** die besagten hydraulischen Verbindungsmittel (15) eine Steuerleitung umfassen, die über einen Kanal (16) mit Druck versorgt wird, der mit dem hinteren Eingangsventil (12) verbunden ist, und dadurch, dass die besagten mechanischen Verbindungsmittel (14) eine Schubstange umfassen, die sich dazu eignet, um das vordere Eingangsventil (13) nur dann zu bewegen, wenn die hydraulischen Verbindungsmittel (15) defekt sind.

7. Hydrauliksystem (1) zum Bremsen nach einem der vorherigen Ansprüche, **dadurch gekennzeichnet, dass** die besagten ersten und zweiten Druckversorgungsmittel (2, 3) jeweils zumindest einen Druckspeicher umfassen.

8. Hydrauliksystem (1) zum Bremsen nach einem der vorherigen Ansprüche, **dadurch gekennzeichnet, dass** die besagten Verteilungsmittel (10, 11, 12, 13) ein hinteres Eingangsventil (12), ein vorderes Eingangsventil (13), ein erstes Bremsventil (10) und ein zweites Bremsventil (11) umfassen, wobei:
- das hintere Eingangsventil (12) folgendes aufweist:
-- einen Eingang (122), der mit dem ersten Druckversorgungsmittel (2) verbunden ist, und
-- einen Ausgang (123), der mit dem ersten und dem zweiten Bremsventil (11) verbunden ist;
- das vordere Eingangsventil (13) folgendes aufweist:
-- einen Eingang (132), der mit dem zweiten Druckversorgungsmittel (3) verbunden ist, und
-- einen Ausgang (133), der mit dem ersten Bremsventil (10) verbunden ist;
- das erste Bremsventil (10) folgendes aufweist:
-- einen ersten Eingang (101), der mit dem Ausgang (123) des hinteren Eingangsventils (12) verbunden ist,
-- einen zweiten Eingang (103), der mit dem Ausgang (133) des vorderen Eingangsventils (13) verbunden ist,
-- einen ersten Ausgang (104), der mit dem ersten Bremsmittel für die Hinterachse (4) verbunden ist,
-- einen zweiten Ausgang (105), der mit dem zweiten Bremsventil (11) verbunden ist;
- das zweite Bremsventil (11) folgendes aufweist:
-- einen ersten Eingang (111), der mit dem Ausgang (123) des hinteren Eingangsventils (12) verbunden ist,
-- einen zweiten Eingang (113), der mit dem zweiten Ausgang (105) des ersten Bremsventils (10) verbunden ist,
-- einen ersten Ausgang (114), der mit dem zweiten Bremsmittel für die Hinterachse (5) verbunden ist,
-- einen zweiten Ausgang (115), der mit dem Bremsmittel für die Vorderachse (6) verbunden ist.

9. Hydrauliksystem (1) zum Bremsen nach dem vorherigen Anspruch, **dadurch gekennzeichnet, dass** jedes der besagten Ventile (10, 11, 12, 13) eine Ausschaltposition aufweist, in der jeder der Ausgänge (104, 105, 114, 115, 123, 133) mit einem Tank unter atmosphärischem Druck (50) verbunden ist und jeder der Eingänge (101, 103, 111, 113, 122, 132) geschlossen ist, und eine Einschaltposition, in der
- beim hinteren Eingangsventil (12) der Eingang (122) mit dem Ausgang (123) verbunden ist;
- beim vorderen Eingangsventil (13) der Eingang (132) mit dem Ausgang (133) verbunden ist;
- beim ersten Bremsventil (10) der erste Eingang (101) mit dem ersten Ausgang (104) und der zweite Eingang (103) mit dem zweiten Ausgang (105) verbunden ist;
- beim zweiten Bremsventil (11) der erste Eingang (111) mit dem ersten Ausgang (114) und der zweite Eingang (113) mit dem zweiten Ausgang (115) verbunden ist.

10. Hydrauliksystem (1) zum Bremsen nach dem vorherigen Anspruch, **dadurch gekennzeichnet, dass**
- sich in seiner Ruhekonfiguration jedes der besagten Ventile (10, 11, 12, 13) in der Abschaltposition befindet;
- sich in seiner ersten Bremskonfiguration das hintere Eingangsventil (12), das vordere Eingangsventil (13) und das erste Bremsventil (10) in der Einschaltposition befinden, während sich das zweite Bremsventil (11) in der Abschaltposition befindet;
- sich in seiner zweiten Bremskonfiguration das hintere Eingangsventil (12), das vordere Eingangsventil (13) und das zweite Bremsventil (11) in der Einschaltposition befinden, während sich das erste Bremsventil (10) in der Abschaltposition befindet;
- sich in seiner dritten Bremskonfiguration das hintere Eingangsventil (12), das vordere Eingangsventil (13), das erste Bremsventil (10) und das zweite Bremsventil (11) in der Einschaltposition befinden.

## Claims

1. Hydraulic braking system (1) for a vehicle comprising a front axle and a rear axle, said braking system comprising:
- a first (2) and a second (3) pressure supply means,
- braking means comprising:
-- a first rear axle braking means (4),
-- a second rear axle braking means (5),
-- a front axle braking means (6),
said hydraulic system (1) being **characterized in that** it comprises a rear inlet distributor (12), a front inlet distributor (13), a first brake distributor (10) and a second brake distributor, defining:
-- a standby configuration, in which there is no supply to any of the braking means;
-- a first braking configuration, in which the first supply means applies pressure to the first braking means of the rear axle (4);
-- a second braking configuration in which the first supply means applies pressure to the second braking means of the rear axle (5);
-- a third braking configuration in which the first supply means applies pressure to the first and second rear axle braking means (4, 5), and the second supply means applies pressure to the front axle braking means (6),
the pressure in the front axle braking means (6) being applied by the second pressure supply means (3) through the front inlet distributor (13), the first brake distributor (10) and the second brake distributor (11).

2. Hydraulic system (1) according to the previous claim, said system being **characterized in that** it comprises two brake pedals (33, 34) that are pressed by the user applying pressure, and **in that** the standby configuration is the position that the system occupies when no pressure is applied to the brake pedals (33, 34), the first braking configuration is triggered by applying pressure on one of said brake pedals (33 or 34), the second braking configuration is triggered by applying pressure on the other of said brake pedals (33 or 34), and the third braking configuration is triggered by simultaneously pressing the two brake pedals (33 and 34).

3. Hydraulic system (1) according to one of the previous claims, **characterized in that** in its third configuration, one of the first (2) or second (3) supply means applies pressure to an auxiliary braking means (7).

4. Hydraulic braking system (1) according to the previous claim, in which only the means with the highest pressure among the first and second pressure supply means (2, 3) applies pressure to the auxiliary braking means (7), such that the braking pressure of the auxiliary braking means (7) is greater than or equal to the braking pressure of the front axle braking means (6).

5. Hydraulic braking system (1) according to one of the previous claims, **characterized in that** said front inlet distributor (13) is slaved in displacement relative to the displacement of the rear inlet distributor (12) through mechanical (14) and hydraulic (15) connection means.

6. Hydraulic braking system (1) according to the previous claim, **characterized in that** said hydraulic connection means (15) include a slaving line supplied with pressure through a conduit (16) connected to the rear supply distributor (12), and **in that** said mechanical connection means (14) comprise a thrust rod adapted so that it only moves the front inlet distributor (13) if the hydraulic connection means (15) are defective.

7. Hydraulic braking system (1) according to one of the previous claims, **characterized in that** each of said first and second pressure supply means (2, 3) comprises at least one accumulator.

8. Hydraulic braking system (1) according to one of the previous claims, **characterized in that** said distribution means (10, 11, 12, 13) comprise a rear inlet distributor (12), a front inlet distributor (13), a first brake distributor (10) and a second brake distributor (11), in which:
- the rear inlet distributor (12) comprises:
-- an input (122) connected to the first pressure supply means (2), and
-- an output (123) connected to the first and second brake distributors (11);
- the front inlet distributor (13) comprises:
-- an input (132) connected to the second pressure supply means (3), and
-- an output (133) connected to the first brake distributor (10);
- the first brake distributor (10) comprises:
-- a first input (101) connected to the output (123) of the rear inlet distributor (12),
-- a second input (103) connected to the output (133) of the front inlet distributor (13),
-- a first output (104) connected to the first rear axle braking means (4),
-- a second output (105) connected to the second brake distributor (11);
- the second brake distributor (11) comprises:
-- a first input (111) connected to the output (123) of the rear inlet distributor (12),
-- a second input (113) connected to the second output (105) of the first brake distributor (10),
-- a first output (114) connected to the second rear axle braking means (5),
-- a second output (115) connected to the front axle braking means (6).

9. Hydraulic braking system (1) according to the previous claim **characterized in that** each of said distributors (10, 11, 12, 13) has a cut-out position in which each output (104, 105, 114, 115, 123, 133) is connected to a reservoir at atmospheric pressure (50) and each input (101, 103, 111, 113, 122, 132) is closed, and a cut-in position in which
- the input (122) of the rear inlet distributor (12) is connected to its output (123);
- the input (132) of the front inlet distributor (13) is connected to its output (133);
- the first input (101) of the first brake distributor (10) is connected to its first output (104) and its second input (103) is connected to its second output (105);
- the first input (111) of the second brake distributor (11) is connected to its first output (114) and its second input (113) is connected to its second output (115).

10. Hydraulic braking system (1) according to the previous claim, **characterized in that**
- in its standby configuration, each of said distributors (10, 11, 12, 13) is in the cut-out position;
- in its first braking configuration, the rear inlet distributor (12), the front inlet distributor (13) and the first brake distributor (10) are in the cut-in position, while the second brake distributor (11) is in the cut-out position;
- in its second braking configuration, the rear inlet distributor (12), the front inlet distributor (13) and the second brake distributor (11) are in the cut-in position, while the first brake distributor (10) is in the cut-out position;
- in its third braking configuration, the rear inlet distributor (12), the front inlet distributor (13), the first brake distributor (10) and the second brake distributor (11) are in the cut-in position.
